# EUROPÄISCHE PATENTSCHRIFT

(11) **EP 1 382 518 B1**
(45) Veröffentlichungstag und Bekanntmachung des Hinweises auf die Patenterteilung: **22.07.2009**
(21) Anmeldenummer: 03015155.9
(22) Anmeldetag: 04.07.2003
(51) Int. Cl.: B62D 29/00, B62D 25/00

(54) **Verfahren zur Herstellung eines Karosserie-Blechbauteils**
Method for manufacturing a sheet metal component for a vehicle body
Procédé de fabrication d'un élément en tôle pour une carrosserie

(30) Priorität: 12.07.2002 DE 10231864
(43) Veröffentlichungstag der Anmeldung: 21.01.2004
(73) Patentinhaber: AUDI AG, 85045 Ingolstadt (DE)
(72) Erfinder: Winkler, Andreas, 74074 Heilbronn (DE)

(56) Entgegenhaltungen:
- DE-A- 2 545 741
- DE-A- 4 300 398
- DE-U- 1 871 490
- US-A- 5 070 717
- US-B1- 6 247 344

## Beschreibung

Die Erfindung betrifft ein Verfahren zur Herstellung eines Karosserie-Blechbauteils nach dem Oberbegriff des Anspruchs 1.

Ein bekanntes Karosserie-Blechbauteil besteht aus einem Blechformteil und einem randseitig am Blechformteil anschließenden Blechhohlträger. Der Aufbau eines solchen Karosserie-Blechbauteils ist regelmäßig zweiteilig, nämlich einerseits der Blechhohlträger (EP 1 172 281 A1) und andererseits das Blechformteil, die beide unabhängig voneinander hergestellt werden. Der Blechhohlträger ist z. B. als Karosserie-Längsträger oder als Querträger oder als Säule in einem Kraftfahrzeug verwendet. Das Blechformteil, das z. B. eine an den Blechhohlträger anschließende Fahrzeugaußenseite bildet, ist mit einer zugeordneten Blechformteil-Randkante mit dem Blechhohlträger verbunden, insbesondere verschweißt. Für eine sichere Verbindung zwischen den beiden Bauteilen ist oftmals sowohl am Blechformteil als auch am Blechhohlträger ein Schweißflansch ausgebildet, an dem die beiden Bauteile zusammengeschweißt sind. Der Blechhohlträger kann aus einem Rohr gefertigt bzw. geformt werden oder zweiteilig aus zwei Halbschalen hergestellt werden. Somit sind zur kompletten Fertigstellung des bekannten Karosserie-Blechbauteils regelmäßig mindestens zwei Schweißvorgänge und daraus resultierend zwei Schweißnähte notwendig. Zur Herstellung des Blechhohlträgers mit daran angeordnetem Schweißflansch ist wenigstens ein Schweißvorgang notwendig und für die weitere Anbindung des Blechformteils an den Blechhohlträger ist ein weiterer Schweißvorgang notwendig. Bei einem aus mehreren Bauteilen zusammengesetzten Hohlträger erhöht sich die Anzahl von Schweißvorgängen bzw. Schweißnähten dementsprechend.

Weiter ist ein gattungsgemäßes Karosserie-Blechbauteil als Bordwand für Lastkraftwagen und Anhänger bekannt (DE 25 45 741 A1), bestehend aus einem Blechformteil und einem randseitig am Blechformteil anschließenden Blechrohrprofil, wobei das Karosserie-Blechbauteil einstückig aus einer Blechplatine geformt ist und ein Blechplatinenrandbereich rohrförmig eingebogen ist. Dadurch ist ein Hohlprofil gebildet, welches sich mit seinem freien Rand einseitig auf das Füllblech auflegt.

Die Aufgabe der Erfindung besteht darin ein Verfahren zur Herstellung eines Karosserie-Blechbauteils vorzuschlagen, mit welchem ein hinsichtlich seiner Festigkeit, des Korrosionsschutzes, des optischen Eindrucks und der Maßhaltigkeit verbessertes Karosserie-Blechbauteil erhalten wird.

Diese Aufgabe wird mit den Merkmalen des Anspruchs 1 gelöst.

Gemäß Anspruch 1 wird diese Aufgabe dadurch gelöst, dass der rohrförmig eingebogene Blechplatinenrandbereich und die zugeordnete Blechplatinenrandkante zur Ausbildung eines Blechholträgers mittels einer Schweißverbindung verbunden werden, wobei der an dem Blechholträger anschließende Blechplatinenbereich das Blechformteil bildet.

Weiter wird die Blechplatinenrandkante stumpf und/oder mit einem abgekanteten Schweißflansch mittels einer Längsschweißnaht mit dem Blechplatinenrandbereich verbunden. Damit wird ein stabiler Blechhohlträger als Bestandteil des Karosserie-Blechbauteils geschaffen. Die Anbringung der Längsschweißnaht entlang dem abgekanteten Schweißflansch bzw. entlang der Blechplatinenrandkante, die stumpf an den Blechplatinenrandbereich anstößt, ist einfach automatisierbar und kann über die gesamte Länge als dichte Schweißnaht ausgeführt werden. Weiter erfindungsgemäß wird die Längsschweißnaht zur Vorbereitung auf einen weiteren Arbeitsschritt durchgehend dicht ausgeführt und der Blechhohlträger im nachgeordneten Arbeitsschritt durch eine Innen-Hochdruck-Umformung (IHU) in seine Endform umgeformt. Somit kann der Blechhohlträger in seiner Längsausdehnung unterschiedliche Querschnitte, wie z. B. einen kreisförmigen und einen rechteckigen Querschnitt bzw. unterschiedliche Querschnittsgrößen aufweisen.

In einer bevorzugten Ausführungsform wird der Blechplatinenrandbereich gemäß Anspruch 2 durch Rollen und/oder durch mehrfaches Abkanten rohrförmig zum Blechhohlträger eingebogen. Damit sind eine Vielzahl unterschiedlicher Querschnittsprofile des Blechhohlträgers, wie z. B. ein kreisförmiger oder rechteckiger Querschnitt, einfach herstellbar.

Für eine optimale Verbindung zwischen der Blechplatinenrandkante und dem Blechplatinenrandbereich ist die Blechplatinenrandkante als gegenüber dem Blechformteil schmaler, abgekanteter Schweißflansch ausgebildet.

Für eine weitere Bearbeitung des Karosserie-Blechbauteils wird gemäß Anspruch 3 das Blechformteil nach Ausbildung des Blechhohlträgers in einem nachgeordneten Arbeitsschritt durch Tiefziehen und/oder Prägen und/oder Stanzen in seine Endform umgeformt. Damit ist das Blechformteil als Bestandteil des Karosserie-Blechbauteils für seine weitere Verwendung, wie z. B. die Anbindung durch Einclipsen weiterer Bauteile, vorbereitet. Durch das Einbringen von z. B. Sicken in das Blechformteil kann die Stabilität desselben erhöht werden.

Weiter kann die Blechplatine zumindest teilweise vor der Ausbildung des Blechhohlträgers und/oder der Umformung des Blechformteils zugeschnitten werden. Um nach der Ausbildung des Blechhohlträgers und/oder der Umformung des Blechformteils notwendige Zuschnittarbeiten des Karosserie-Blechbauteils zu reduzieren, wird die Blechplatine zu Beginn der Umformungen so zugeschnitten, gegebenenfalls schon der Endzuschnitt durchgeführt, dass die Blechplatine bereits die Grundform des Karosserie-Blechbauteils aufweist.

Weitere Einzelheiten bezüglich Weiterbildungen des Verfahrens zur Herstellung des Karosserie-Blechbauteils sind der Beschreibung der vorherigen Ansprüche zu entnehmen.

Anhand einer Zeichnung wird die Erfindung näher erläutert.

Es zeigen:
- Fig. 1: eine schematische, perspektivische Darstellung eines Karosserie- Blechbauteils,
- Fig. 2: eine schematische Schnittdarstellung des Schnittes A - A von Fig. 1,
- Fig. 3: eine schematische Schnittdarstellung des Schnittes B - B von Fig. 1, und
- Fig. 4: eine schematisch Schnittdarstellung einer weiteren Ausführungs- form eines Karosserie-Blechbauteils.

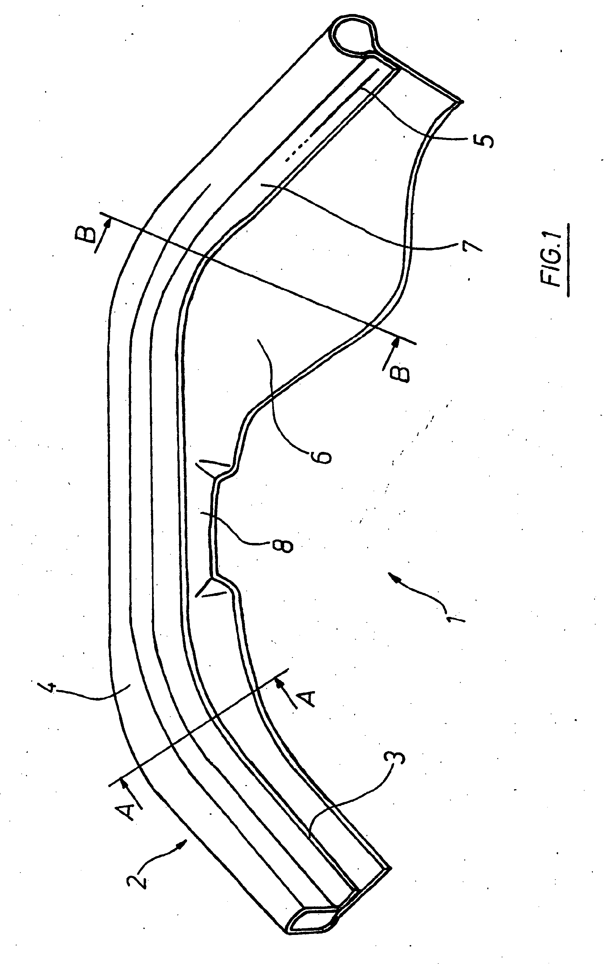

In Fig. 1 ist schematisch, perspektivisch ein Karosserie-Blechbauteil 1 dargestellt. Das Karosserie-Blechbauteil 1 ist einstückig aus einer Blechplatine geformt, wobei ein Blechplatinenrandbereich 2 rohrförmig eingebogen und eine Blechplatinenrandkante 3 zur Ausbildung eines Blechhohlträgers 4 mittels einer Schweißverbindung 5 mit dem Blechplatinenrandbereich 2 verbunden ist. Der an dem Blechhohlträger 4 anschließende Blechplatinenbereich bildet ein Blechformteil 6. Die Blechplatinenrandkante 3 ist gegenüber dem Blechformteil 6 als schmaler, abgekanteter Schweißflansch 7 ausgebildet. Entlang dem Schweißflansch 7 ist die Schweißverbindung 5 als Längsschweißnaht durchgehend dicht ausgeführt.

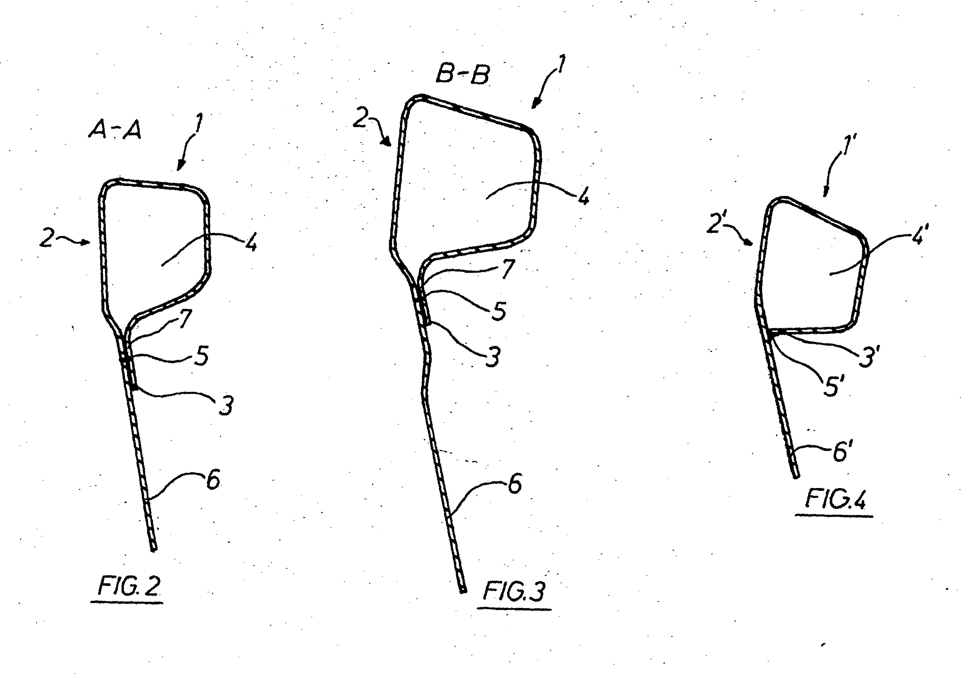

In einem nachgeordneten Arbeitsschritt ist der Blechhohlträger 4 durch eine Innen-Hochdruck-Umformung (IHU) in seine Endform umgeformt, so dass einerseits unterschiedliche Querschnittsprofile und andererseits unterschiedliche Querschnittsgrößen entstehen. In Fig. 1 ist an einem Ende des Blechhohlträgers 4 ein Rechteckprofil dargestellt und am anderen Ende des Blechhohlträgers 4 ein Kreisprofil. Die jeweilige Darstellung der Schnitte A - A und B - B (siehe Fig. 2 und 3) zeigt unterschiedliche Querschnittsgrößen des Blechhohlträgers 4.

In dem an den Blechhohlträger 4 anschließenden Blechformteil 6 ist eine Verprägung 8 in einem nach der Ausbildung des Blechhohlträgers 4 nachgeordneten Arbeitsschritt eingebracht. Grundsätzlich kann das Blechformteil durch Tiefziehen und/oder Prägen und/oder Stanzen in nachgeordneten Arbeitsschritten weiter umgeformt werden.

In den Figuren 2 und 3 ist jeweils schematisch eine Schnittdarstellung des Schnittes A - A bzw. des Schnittes B-B dargestellt. Gleiche Bauteile sind mit gleichen Bezugszeichen versehen. Hierbei sind die durch Innen-Hochdruck-Umformung (IHU) entstandenen unterschiedlichen Querschnittsgrößen des Blechhohlträgers 4 zu erkennen. An den aus der Blechplatine rohrförmig eingebogenen Blechhohlträger 4 schließt sich einstückig das Blechformteil 6 an. Die Blechplatinenrandkante 3 ist als gegenüber dem Blechformteil 6 schmaler, abgekanteter Schweißflansch 7 ausgebildet. Der Schweißflansch 7 ist mittels der Schweißverbindung 5 mit dem Blechplatinenrandbereich 2 verbunden. Die Ausdehnung des Blechformteils 6 vom Blechhohlträger 4 ausgehend ist je nach Anforderung an das Karosserie-Blechbauteil 1 unterschiedlich gestaltbar, wie in den Figuren 2 und 3 dargestellt.

In Fig. 4 ist eine alternative Ausführung des Karosserie-Blechbäuteils 1' in einer schematischen Schnittdarstellung gezeigt. Dabei ist die Blechplatinenrandkante 3' stumpf an den Blechplatinenrandbereich 2' angelegt und mittels einer Schweißverbindung 5' verbunden. Alle weiteren Einzelheiten der Fig. 4 entsprechen den in den vorherigen Figuren beschriebenen.

## Patentansprüche

1. Verfahren zur Herstellung eines Karosserie-Blechbauteils, bestehend aus einem Blechformteil (6, 6') und einem randseitig am Blechformteil (6, 6') anschließenden Blechrohrprofil,
- wobei das Karosserie-Blechbauteil (1, 1') einstückig aus einer Blechplatine geformt wird und ein Blechplatinenrandbereich (2, 2') rohrförmig eingebogen wird,
- wobei der rohrförmig eingebogene Blechplatinenrandbereich (2, 2') und die zugeordnete Blechplatinenrandkante (3, 3') zur Ausbildung eines Blechhohlträgers (4, 4') mittels einer Schweißverbindung (5, 5') verbunden werden und der an den Blechhohlträger (4, 4') anschließende Blechplatinenbereich das Blechformteil (6, 6') bildet,
- wobei die Blechplatinenrandkante (3, 3') stumpf und/oder mit einem abgekanteten Schweißflansch (7) mittels einer Längsschweißnaht mit dem Blechplatinenrandbereich (2, 2') verbunden wird und
- wobei die Längsschweißnaht durchgehend dicht ausgeführt wird und der Blechhohlträger (4, 4') in einem nachgeordneten Arbeitsschritt durch eine Innen-Hochdruck-Umformung (IHU) in seine Endform umgeformt wird.

2. Verfahren nach Anspruch 1, **dadurch gekennzeichnet,**
**dass** der Blechplatinenrandbereich (2, 2') durch Rollen und/oder durch mehrfaches Abkanten rohrförmig zum Blechhohlträger (4, 4') eingebogen wird.

3. Verfahren nach Anspruch 1 oder Anspruch 2, **dadurch gekennzeichnet, dass** das Blechformteil (6, 6') nach Ausbildung des Blechhohlträgers (4, 4') in einem nachgeordneten Arbeitsschritt durch Tiefziehen und/oder Prägen und/oder Stanzen in seine Endform umgeformt wird.

## Claims

1. Method for manufacturing a vehicle body sheet metal component, comprising a formed sheet metal component (6, 6') and a sheet metal tubular profile adjoining the edge of the formed sheet metal component (6, 6'), wherein the vehicle body sheet metal component (1, 1') is formed in one piece from a sheet of metal and a sheet metal border region (2, 2') is bent over into a tubular shape, wherein the tubular bent-over sheet metal border region (2, 2') and the associated sheet metal border edge (3, 3') are joined by means of a weld joint (5, 5') to form a metal sheet hollow support (4, 4') and the metal sheet region adjoining the metal sheet hollow support (4, 4') constitutes the formed sheet metal component (6, 6'), wherein the metal sheet border edge (3, 3') is joined with a butt-join, and/or with a folded weld flange (7) by means of a longitudinal weld seam, to the metal sheet border region (2, 2') and wherein the longitudinal weld seam is configured sealing throughout and the metal sheet hollow support (4, 4') is shaped into its final form in a subsequent operation by means of internal high pressure forming.

2. Method according to claim 1, **characterised in that** the metal sheet border region (2, 2') is bent over by rolling and/or multiple folding in tubular manner into a metal sheet hollow support (4, 4').

3. Method according to claim 1 or claim 2, **characterised in that**, after forming the metal sheet hollow support (4, 4'), in a subsequent process step, the sheet metal component (6, 6') is shaped into its final form by deep drawing and/or punching and/or stamping.

## Revendications

1. Procédé pour la fabrication d'un élément de carrosserie en tôle se composant d'une pièce usinée en tôle (6, 6') et d'un profilé tubulaire en tôle se raccordant côté bord à la pièce usinée en tôle (6, 6'),
- l'élément de carrosserie en tôle (1, 1') étant formé d'une seule pièce à partir d'une platine pour tôles et une zone de bord des platines pour tôles (2, 2') étant courbée de manière à présenter une forme tubulaire,
- la zone de bord des platines pour tôles courbée de manière à présenter une forme tubulaire (2, 2') et l'arête du bord des platines pour tôles (3, 3') associée étant reliés afin de former un support creux en tôle au moyen d'une soudure (5, 5') et la zone des platines pour tôles se raccordant au support creux en tôle (4, 4') formant la pièce usinée (6, 6'),
- l'arête du bord des platines pour tôles (3, 3') étant reliée, bord à bord et/ou avec une bride à souder (7) chanfreinée, au bord des platines pour tôles (2, 2') au moyen d'un joint de soudure longitudinal
et
- le joint de soudure longitudinal étant réalisé en continu de manière étanche et le support creux en tôle (4, 4') étant modifié dans sa forme finale au cours d'une étape de traitement consécutive par formage par haute pression interne.

2. Procédé selon la revendication 1, **caractérisé en ce**
**que** la zone de bord des platines pour tôle (2, 2') est incurvée de manière à présenter une forme tubulaire par rapport au support creux en tôle (4, 4') par roulement et/ou par chanfreinages successifs.

3. Procédé selon la revendication 1 ou 2, **caractérisé en ce que** la pièce usinée en tôle (6, 6') est modifiée dans sa forme finale par emboutissage et/ou par gaufrage et/ou par matriçage après la formation du support creux en tôle (4, 4') au cours d'une étape de traitement consécutive.
